Europäisches Patentamt

European Patent Office

Office européen des brevets

(11) Veröffentlichungsnummer: **0 463 317 A1**

# EUROPÄISCHE PATENTANMELDUNG

(21) Anmeldenummer: **91106753.6**

(22) Anmeldetag: **26.04.91**

(51) Int. Cl.5: **B25B 11/00**

(30) Priorität: **22.06.90 DE 4019936**

(43) Veröffentlichungstag der Anmeldung:
**02.01.92 Patentblatt 92/01**

(84) Benannte Vertragsstaaten:
**BE ES FR GB IT NL**

(71) Anmelder: **DEUTSCHE AIRBUS GMBH**
**Kreetslag**
**W-2000 Hamburg(DE)**

(72) Erfinder: **Eickhorst, Helmut**
**Grashof 17**
**W-2930 Varel(DE)**
Erfinder: **Wilekn, Enno**
**Taubenweg 8**
**W-2930 Varel 1(DE)**

(54) **Vorrichtung zur Höhenverstellung einer Spanneinrichtung.**

(57) Bei dieser Höhenverstellung wird ein Spindel der Spanneinrichtung mittels eines Getriebes stufenlos höhenverstellt. Das Getriebe umfaßt ein mit einem Motor verbundenes Ritzel, das auf ein Zahnrad wirkt, welches mittelbar mit der Spindel verbunden ist.

Fig.1

Die Erfindung bezieht sich auf eine Vorrichtung zur Höhenverstellung einer Spanneinrichtung für großflächige Werkstücke, wie Bleche oder dergleichen, die zur Bearbeitung durch eine Unterdruck-Spanneinrichtung gehalten wird.

Es ist eine Unterdruck-Spanneinrichtung aus der DE-PS 31 26 720 bekannt, die einen Spannkopf umfaßt, der aus einem das Werkstück spannenden Kopfteil sowie einem Kopfhalter besteht, der über eine Spindel in einem Fußteil höhenverstellbar gehalten wird. Die Verstellung erfolgt manuell durch verschieben der Spindel, die in der jeweilig eingestellten Position über eine Schraube festsetzbar ist.

Aufgabe der Erfindung ist es, eine verbesserte Vorrichtung einer Spanneinrichtung zu schaffen, die selbsttätig stufenlos höhenverstellbar ist.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß die Höhenverstellung des Spannkopfes automatisch über ein mit einem Motor zusammenarbeitendes Getriebe erfolgt, das mittelbar auf die Spindel wirkt und diese stufenlos in Hochrichtung verstellt. Hierzu ist die Spindel in Kugelgewinde-Spindelmuttern einer Lagerhülse geführt, die wiederum über Rollenlager in einer äußeren Grundkörper gehalten ist.

Der Antriebsmotor des Getriebes kann mit einem elektrischen Steuergerät verbunden sein, das ein Höhenparameter so verarbeitet, daß der Spannkopf in eine entsprechend richtige Höhe einstellbar ist, d.h., das aufzunehmende Werkstück kann ohne jegliche Korrektur der Höheneinstellung sofort von der Spanneinrichtung gehalten werden.

Eine Erfassung der eingestellten Höhenposition erfolgt beispielsweise über einen angebauten Drehgeber, der ein in das Zahnrad eingreifendes Ritzel umfaßt. Alternativ hierzu ist der Antrieb bzw. das Meßsystem auch über Zahnriemen oder ähnlichem möglich. Zur Verhinderung einer nicht gewünschten Drehbewegung der Spindel ist ein Drehmomenthalter am Fuß der Vorrichtung vorgesehen, der sich auf einen an den Grundkörper anschließendes Führungsrohr befestigten Paßfeder bewegt.

Für die Versorgung der Spanneinheit mit Druckluft bzw. Vakuum ist die Spindel mit einem zentralen Luftkanal versehen, in dem ein Luftkolben angeordnet ist, der über ein Standrohr mit einer Bodenplatte verbunden wird.

Ein Ausführungsbeispiel der Erfindung ist in der Zeichnung schematisch dargestellt und wird im folgenden näher beschrieben. Es zeigen:

Fig. 1    eine Vorderansicht der Vorrichtung zur Höhenverstellung im Schnitt,

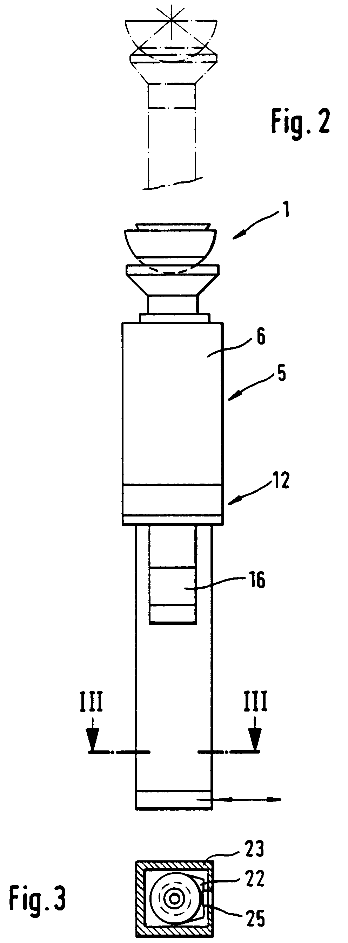

Fig. 2    eine Seitenansicht der Vorrichtung gemäß Fig. 1 und

Fig. 3    einen Schnitt nach Linie III-III der Fig. 2.

Die dargestellte Spanneinrichtung 1 umfaßt ein Kopfteil 2, in dem ein Unterdruck-Spannelement 3 gelagert ist. Am Kopfteil 2 ist eine Spindel 4 befestigt, die mit einer Vorrichtung 5 zur Höhenverstellung verbunden wird.

Diese Vorrichtung 5 umfaßt im wesentlichen einen Grundkörper 6, in dem über Rollenlager 7,8 eine Lagerhülse 9 drehbar gelagert ist. In dieser Hülse 9 sind Übertragungselemente 10,10a spielfrei verspannt, die aus Kugelgewinde-Spindelmuttern 11,11a bestehen, in denen die Spindel 4 verdrehbar angeordnet ist.

Die Lagerhülse 9 wird über ein Getriebe 12 in Drehung versetzt, derart, daß die Spindel 4 in den Pfeilrichtungen 13 und 14 axial verstellbar ist.

Das Getriebe 12 umfaßt ein mit der Lagerhülse 9 verbundenes Zahnrad 15, daß mit einem Motor 15 angetriebenen Ritzel 17 in Eingriff steht.

Das Zahnrad 15 ist koaxial zur Lagerhülse 9 angeordnet, wobei die Motorachse 18 achsparallel zur Längsachse 19 der Vorrichtung angeordnet ist. Statt des Zahnrades 15 wäre auch eine Zahnstange, die dann auf der Lagerhülse 19 angeordnet ist, denkbar.

Über ein weiteres Ritzel 20 ist das Zahnrad 15 mit einem Drehgeber 21 zur Positionserfassung der Höhe verbunden.

Der Motor 16 kann mit einem elektrischen Steuergerät verbunden sein, in das gewünschte Höhenparameter eingebbar sind und das in Abhängigkeit von diesen Parametern der Motor 16 zur axialen Verstellung der Spindel 4 steuert.

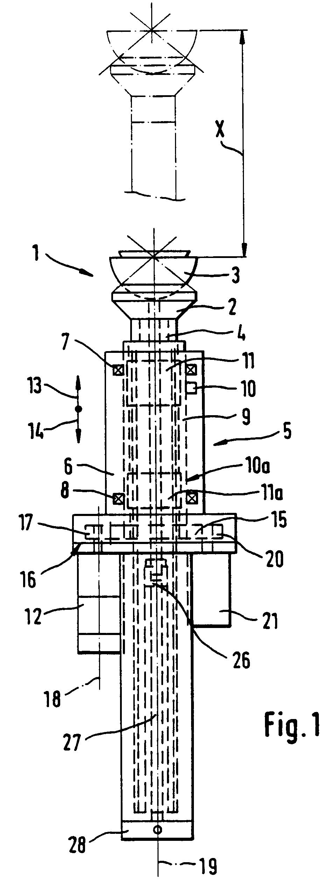

Zur Höhenverstellung der Spanneinrichtung 1, z. B. um einen Betrag X, wie in Fig. 1 näher dargestellt, wird über dem Motor 16 das Ritzel 17 in Drehung versetzt, das wiederum das Zahnrad 15 auf der Lagerhülse 9 antreibt. Hierdurch wird die in den Kugelgewinde-Spindelmuttern 11,11a geführte Spindel 4 der Spanneinrichtung 1 in Hochrichtung verstellt.

Damit eine nicht gewünschte Drehbewegung der Spindel 4 vermieden wird, ist ein Drehmomenthalter 22 im Fuß der Vorrichtung vorgesehen, der sich auf einen im Führungsrohr 23 befestigten Paßfeder 25 bewegt.

Die Versorgung der Spanneinheit 1 mit Druckluft erfolgt über einen zentralen Druckluftkanal in der Spindel 4, in der gleitend ein Luftkolben 26 angeordnet ist, welcher über ein Standrohr 27 mit einer Bodenplatte 28 verbunden wird.

**Patentansprüche**

1.   Vorrichtung zur Höhenverstellung einer Spanneinrichtung für großflächige Werkstücke, wie

2

Bleche oder dergleichen, die zur Bearbeitung durch eine Unterdruck-Spanneinrichtung gehalten wird, gekennzeichnet durch eine in einem Grundkörper (6) höhenverstellbare Spanneinrichtung (1), die eine über ein Stellgetriebe (12) in einer antreibbaren Lagerhülse (9) angeordneten Spindel (4) umfaßt, welche durch Übertragungselemente (10,10a) in der Lagerhülse (9) drehbar gehalten ist.

2. Vorrichtung nach Anspruch 1, dadurch gekennzeichnet, daß das Stellgetriebe (12) aus einem mit der Lagerhülse (9) umfangsseitig verbundenen Zahnrad (15) besteht, das mit einem Ritzel (17) eines Antriebsmotors (16) in Eingriff steht.

3. Vorrichtung nach einem der Ansprüche 1 oder 2, dadurch gekennzeichnet, daß der Motor (16) des Stellgetriebes, (12) mit einem elektrischen Steuergerät verbunden ist, das entsprechend einem Höhenparameter automatisch und stufenlos an das Niveau des spannbaren Werkstückes anpaßbar ist.

4. Vorrichtung nach einem oder mehreren der vorhergehenden Ansprüche, dadurch gekennzeichnet, daß das Zahnrad (15) koaxial auf der Lagerhülse (9) angeordnet ist und das Ritzel (17) mit dem Motor (16) achsparallel zur Spindel (4) verläuft.

5. Vorrichtung nach einem oder mehreren der vorhergehenden Ansprüche, dadurch gekennzeichnet, daß mit dem Zahnrad (15) ein weiteres Ritzel (20) in Eingriff steht, das mit einem Drehgeber (21) verbunden ist.

6. Vorrichtung nach einem oder mehreren der vorhergehenden Ansprüche, dadurch gekennzeichnet, daß die Lagerhülse (9) über zwei im Abstand zueinander angeordnete Rollenlager (7 und 8) im Grundkörper (6) spielfrei gelagert ist und daß in der Lagerhülse (9) etwa in der Ebene der Rollenlager (7 und 8), die aus Kugelgewinde-Spindelmuttern (11,11a) bestehend Übertragungselemente (10,10a) gehalten sind, in der die Spindel (4) drehend geführt wird.

7. Vorrichtung nach einem oder mehreren der vorhergehenden Ansprüche, dadurch gekennzeichnet, daß die Spindel (4) an ihrem der Spanneinheit (1) abgekehrten Ende einen Drehmomenthalter (22) aufweist, welcher sich auf einer im Führungsrohr (23) befestigten Paßfeder (25) bewegt.

Fig.1

**Fig. 2**

1

6

5

12

16

III          III

23

22

25

**Fig. 3**

| | **EINSCHLÄGIGE DOKUMENTE** | | EP 91106753.6 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
| X | US - A - 4 527 783 (COLLORA) * Fig. 5 * | 1-3 | B 25 B 11/00 |
| A | US - A - 4 684 113 (DOUGLAS) * Fig. 3 * | 1 | |
| A | US - A - 3 559 980 (KAWASAKI) * Fig. 3 * | 1,3 | |
| A | DE - A1 - 3 613 644 (TÜNKERS) * Fig. 3 * | 1,2,4 | |
| A | EP - A1 - 0 283 103 (TECHNISCH) * Fig. 3 * | 3,7 | |
| | | | **RECHERCHIERTE SACHGEBIETE (Int. Cl.⁵)** |
| | | | B 25 B 11/00 A 47 B 9/00 |

Der vorliegende Recherchenbericht wurde für alle Patentansprüche erstellt.

| Recherchenort | Abschlußdatum der Recherche | Prüfer |
|---|---|---|
| WIEN | 01-08-1991 | BENCZE |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82